(19) Europäisches Patentamt
European Patent Office
Office européen des brevets

(11) **EP 1 783 877 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
*H02G 15/105* (2006.01)    *H01B 9/02* (2006.01)

(21) Anmeldenummer: **06017898.5**

(22) Anmeldetag: **28.08.2006**

(54) **Übertragungssystem zur magnetfeldarmen Übertragung hoher Leistungen**

Transmission system for high power transmission with low magnetic field

Système de transmission pour la transmission haute puissance à bas champ magnétique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.11.2005 DE 102005052840**

(43) Veröffentlichungstag der Anmeldung:
**09.05.2007 Patentblatt 2007/19**

(73) Patentinhaber: **GEO Gesellschaft für Energie und Oekologie mbH**
**25917 Enge-Sande (DE)**

(72) Erfinder: **Jensen, Marten**
**25917 Leck (DE)**

(74) Vertreter: **Biehl, Christian et al**
**Boehmert & Boehmert**
**Anwaltssozietät**
**Niemannsweg 133**
**24105 Kiel (DE)**

(56) Entgegenhaltungen:
**EP-A- 0 071 435**          **DE-C1- 19 512 018**

**Beschreibung**

Die Erfindung betrifft ein Kabelsystem, das die unterirdische Übertragung hoher Leistungen bei sehr geringen Magnetfeldern erlaubt.

Wenn in der Umgebung einer Kabeltrasse niedrige Magnetfeldstärken eingehalten werden sollen, so bietet sich zunächst eine möglichst dichte und symmetrische Legung der drei Kabeladern eines Drehstromsystems, eine sogenannte gebündelte oder auch Dreiecks-Anordnung, an.

Zur weiteren Reduzierung können solche gebündelten Anordnungen in hochleitfähige oder aber in magnetische Umhüllungen eingebracht werden. Ein Beispiel einer 132-kV-Kabelanlage, bei der die drei Kabeladern in Kunststoffrohren innerhalb eines ferromagnetischen Stahlrohres verlegt sind, ist in F. Donazzi "Environmental constraints: electromagnetic fields" (discussion report in CIGRE session 2004, group 21, question 4) wiedergegeben. Mit einer solchen Schirmung lässt sich beispielsweise eine magnetische Flussdichte (Induktion) von 0,2 $\mu$T in Kabelnähe einhalten.

Nachteil einer solchen magnetfeldarmen Anordnung ist die Tatsache, dass die Zusatzverluste hoch sowie die Wärmeabfuhr und damit die Strombelastbarkeit der Kabel wegen der dichten Legung stark eingeschränkt sind.

Sollen große Leistungen bzw. hohe Ströme mit Drehstrom übertragen werden, so legt man die Kabeladern normalerweise mit entsprechenden lichten Abständen in eine Ebene. Die hierbei auftretenden Magnetfelder können erheblich sein. Nimmt man beispielsweise einen Achsabstand der Kabeladern von 0,5 m an und einen Übertragungsstrom von 2000 A, so ergibt sich bei 1,2 m Legetiefe eine magnetische Induktion oberhalb der mittleren Kabelader in 0,2 m Höhe über dem Erdboden von rd. 160 $\mu$T (der gesetzliche Grenzwert in Deutschland liegt bei 100 $\mu$T, in der Schweiz bei 1 $\mu$T und in manchen Regionen Italiens bereits bei 0,2 $\mu$T),

Die Schirmung der einzelnen Kabelader mit magnetischem Material ist nicht möglich. Eine Schirmung der Einzelader mit einer hochleitfähigen Hülle (Cu, Al) ist sehr aufwendig, technisch problematisch und mit hohen Verlusten durch Längsströme verbunden.

Der Erfindung liegt damit die Aufgabe zugrunde, ein magnetfeldarmes Übertragungssystem für sehr hohe Leistungen zu schaffen.

Erfindungsgemäß wird die Aufgabe durch das Übertragungssystem mit den Merkmalen des Anspruchs 1 gelöst. Die Unteransprüche geben vorteilhafte Ausgestaltungen der Erfindung an. Insbesondere geben die Unteransprüche Alternativschaltungen im Falle von unterschiedlich ausgebildeten Störungsfällen an, Diese bieten auch die Möglichkeit eines sukzessiven Aufbaus des erfindungsgemäßen Übertragungssystems.

Bei nicht zu großen Leiterquerschnitten ist es möglich, jeweils zwei Kabeladern des übertragungssystems in eine gemeinsame Kabelkonstruktion zu integrieren.

Die von dem Übertragungssystem zu übertragenden und in jedem Übertragungsstrang gegenphasigen Spannungen werden vorzugsweise dadurch erhalten werden, dass zwei DrehstromTransformatoren, deren Sekundärwicklungen entgegengesetzten Wicklungssinn aufweisen, parallel in die Kabel einspeisen. Alternativ kann ein einspeisender Drehstrom-Transformator verwendet werden, dessen Sekundärwicklungen jeweils eine Mittelanzapfung aufweisen.

Die Erfindung wird im Folgenden anhand einer Zeichnung erläutert. Dabei zeigt:

Fig. 1    die Anordnung der sechs Kabeladern,

Fig. 2    die Einspeisung mit Mittelanzapfung der Sekundärspulen eines Drehstrom-Transformators,

Fig. 3    die beiden von den Trafo-Sekundärspulen abgehenden Kabeladern der Phasen L1-1 und L1-2 (nur ein Übertragungsstrang),

Fig. 4    die Schirmunterdrückung durch Auskreuzen der Schirme zweier benachbarter Kabeladern in der Mitte eines Hauptabschnitts,

Fig. 5a    die Schirmauskreuzung zweier Landkabeladern in einem Hauptabschnitt der Länge $l_0$,

Fig. 5b    die Kontaktierung und Verbindung von Armierung und Bleimantel zweier nebeneinander liegender Seekabeladern

Fig. 6    die Einspeisung eines bipolaren Sechsphasensystems mit zwei Standard-Drehstromtransformatoren am Beispiel der Schaltgruppen Yy0 und Yy6,

Fig.7    die Transformatorschaltung zur Einspeisung in ein bipolares Vierphasen-Übertragungssystem mit entsprechendem Zeigerbild,

Fig. 8      die Einspeisung des bipolaren Sechsphasensystems bei Ausfall eines der beiden Drehstromtransformatoren und

Fig. 9      die Einspeisung des bipolaren Sechsphasensystems bei Ausfall zweier Übertragungsstränge.

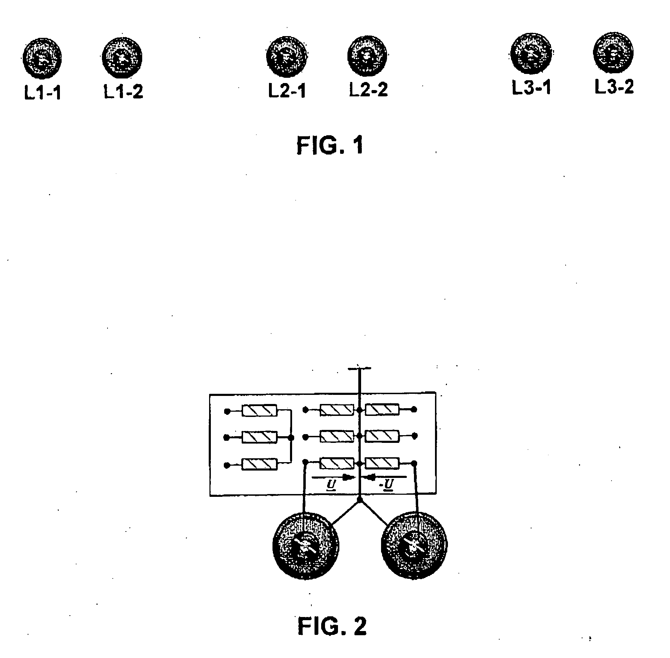

Fig. 1 zeigt sechs Kabeladern des Übertragungssystems, von denen jeweils 2 Kabeladern dicht nebeneinander angeordnet sind. Die Wechselspannungen in den beiden Kabeladern eines Paares sind gegeneinander um 180° versetzt.

Fig. 2 zeigt einen einspeisenden Transformator, dessen Sekundärwicklungen jeweils eine Mittelanzapfung aufweisen, wie dies bei Stromrichtertransformatoren üblich ist. Die beiden entsprechenden Kabeladern werden mit zwei gleichgroßen Wechselspannungen in Phasenopposition:

$$\underline{U}_{L1\text{-}2} = -\underline{U}_{L1\text{-}1} \;\; ; \underline{U}_{L2\text{-}2} = -\underline{U}_{L2\text{-}1} \;\; ; \; \underline{U}_{L3\text{-}2} = -\underline{U}_{L3\text{-}1}$$

mit den zwei Drehstromsystemen in Phasenoppposition:

$$\underline{U}_{L2\text{-}1} = \underline{a}^2 \cdot \underline{U}_{L1\text{-}1} \;\; ; \underline{U}_{L3\text{-}1} = \underline{a} \cdot \underline{U}_{L1\text{-}1} \;\; ; \;\; \underline{a} = e^{j\cdot120°}$$

$$\underline{U}_{L2\text{-}2} = \underline{a}^2 \cdot \underline{U}_{L1\text{-}2} \;\; ; \underline{U}_{L3\text{-}2} = \underline{a} \cdot \underline{U}_{L1\text{-}2}$$

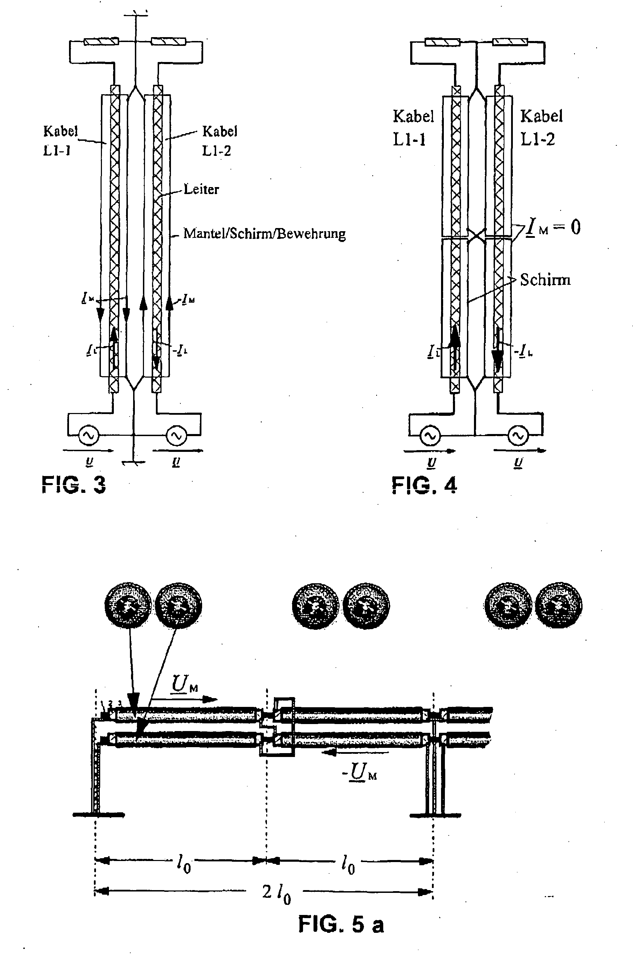

Fig. 3 zeigt die dicht nebeneinander liegenden Kabeladern der Phasen L1-1 und L1-2, abgehend von den beiden Trafo-Sekundärwicklungen. Zu erkennen ist, dass der Laststrom *I* im Leiter der ersten Kabelader (L1-1) zum Verbraucher geführt und im Leiter der zweiten Kabelader (L1-2) von dort zurückgeführt wird. Am abgewandten Ende ist auch der Verbraucher mit Mittelanzapfung entsprechend zu schalten. Am einfachsten geschieht dies durch einen bzw. zwei Transformatoren baugleich mit der Einspeiseseite.

Mit der Schaltung wird erreicht, dass sich die beiden einer Drehstromphase zuzuordnenden Leiterströme (d.h. in L1-1 und L1-2, in L2-1 und L2-2 sowie in L3-1 und L3-2) sich jeweils zu Null ergänzen. Damit verschwindet das Magnetfeld zweier solcher Ströme bereits bei geringem Abstand.

Die Drehstromphasen, bestehend aus den Kabeln L1-1 / L1-2 etc., sind magnetisch voneinander entkoppelt. Als Leitungs-Längsinduktivität für das Übertragungsverhalten entscheidend wird die geringe Induktivität, die durch den Leiterabstand zweier benachbarter Kabeladern (etwa der Kabeldurchmesser) bestimmt ist.

Nach Fig. 3 ist das Mittenpotential (die Mittelanzapfung) des einspeisenden Dreiwicklungstransformators mit den Kabelschirmen oder -mänteln der Kabeladern zu verbinden und zu erden. Verfährt man auf beiden Seiten der Übertragungsanlage so, so werden in die beidseitig geerdeten Kabelschirme (oder -mäntel, ff.) Längsströme induziert, die den jeweiligen Leiterströmen entgegengerichtet sind.

Je nach Auslegung der Kupferschirme oder Metallmäntel stellen sich unterschiedliche Schirmströme und Schirmverluste ein. Ausgehend von sehr kleinen Schirmquerschnitten mit geringen Längsströmen und Verlusten stellt sich bei Vergrößerung des Schirmquerschnitts ein Verlustmaximum ein, jenseits dessen mit weiterer Vergrößerung des Schirmquerschnitts der Schirmstrom gegen den Leiterstrom strebt (also begrenzt ist) und die Schirmverluste wieder abnehmen.

Wählt man den Schirmquerschnitt etwa gleichgroß wie den Leiterquerschnitt, so fließt im Schirm nahezu der Leiterstrom, und es entstehen dort etwa noch einmal die Leiterverluste. Eine solche Konstruktion ist also weder mit den schweren, unhandlichen und teuren Kabeln noch mit seinen hohen Übertragungsverlusten geeignet.

Die Kabelschirme können normal gestaltet und die Schirmverluste unterdrückt werden, wenn längs der Übertragungsstrecke Hauptabschnitte gebildet werden, in deren Mitte die beiden Schinne zweier benachbarter Kabeladern unterbrochen und die beiden Schirmabschnitte einer Ader gegeneinander isoliert werden, um dann den ersten Schirmabschnitt der einen Kabelader auf den zweiten Schirmabschnitt der benachbarten Kabelader elektrisch durch zu verbinden, wie dies in der Fig. 4 für einen Hauptabschnitt dargestellt ist. An den Enden des Hauptabschnittes werden die beiden Schinne miteinander kurzgeschlossen und gegebenenfalls geerdet.

Die beschriebene Schirmschaltung entspricht im Prinzip dem bekannten zyklischen Auskreuzen (Cross-Bonding) von Drehstromkabeln, bei dem der Hauptabschnitt gedrittelt wird und die Schirmabschnitte an den beiden Auskreuzungsstellen entsprechend verschaltet werden. Diese Auskreuzungsmuffen sind im Übrigen durch Überspannungsableiter zu schützen.

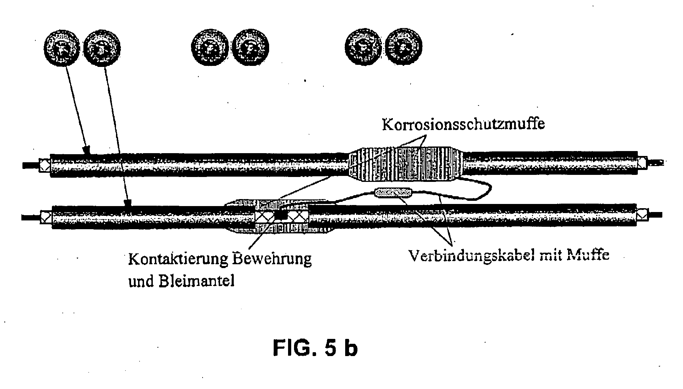

Das Prinzip ist in Fig. 5 weiter verdeutlicht. In den beiden dort rot dargestellten Schirmunterabschnitten werden zwei um 180° gegeneinander phasenversetzte Spannungen induziert. Aus diesem Grunde kann der aus diesen beiden durchverbundenen Schirmabschnitten gebildete Strompfad an seinen beiden Enden geerdet werden, ohne dass in der gebildeten Schleife ein Strom fließt.

Die vorgeschlagene Kabelanlage hat bei dieser Schirmbehandlung mehrere Vorteile gegenüber normalen Drehstromsystemen:

1. Da die beiden Kabeladern dicht nebeneinander liegen, werden in die Schirme nur relativ geringe Längsspannungsbeläge induziert. Dies hat zur Folge, dass die Länge der Auskreuzungsabschnitte bzw. der Hauptabschnitte sehr viel größer sein darf als in dem Fall normaler Drehstromsysteme, in denen die Kabeladern mit großen Abständen verlegt sind, um die Übertragungsleistung zu vergrößern. Die Schircnspannungen können in diesem Fall so geringe Muffenabstände erzwingen, dass dadurch die Lieferlängen der Kabel eingeschränkt werden müssen.

2. Der Aufwand zum Auskreuzen ist gegenüber einem Drehstromkabelsystem spezifisch geringer, da in einem Hauptabschnitt immer nur eine statt zwei Cross-Bonding-Muffen je Schirmpfad vorzusehen ist.

3. Die für das Übertragungsverhalten wirksame Längsreaktanz ist beim Drehstromsystem in Einebenenanordnung durch die großen Abstände der Kabeladern bestimmt. Im vorgeschlagenen System hängt sie hingegen allein von dem geringen Achsabstand zweier benachbarter Kabeladern (etwa dem Kabeldurchmesser) ab und bleibt unhängig von den großen, thermisch wirksamen Legeabständen.

Ist $U_n$ die Nennspannung des einzelnen Kabelsystems, so wird mit einem solchen System eine Leistung von

$$S = 2 \cdot \sqrt{3} \cdot U_n \cdot I$$

übertragen. Dieselbe Übertragungsleistung würde man mit einem Drehstrom-Doppelsystem - also wiederum mit sechs Kabeladern - übertragen können, bei der die Kabeladern in derselben Anordnung wie in Fig. 1 und jeweils zwei benachbarte Kabeladern einer Drehstromphase zugeordnet sind.

Bei der vorgeschlagenen Konfiguration nach Fig. 1 ergänzen sich jedoch die Leiterströme zweier nebeneinander liegender Kabeladern immer zu Null. Daher können jeweils zwei benachbarte Kabeladern mit einer magnetischen Hülle, beispielsweise einem Stahlrohr, umgeben werden, so dass ihr ohnehin schon geringes Magnetfeld auf ein verschwindendes Maß verringert werden kann.

Dieses Prinzip funktioniert - im Gegensatz zu einem gebündelten Drehstromsystem in einer magnetischen Hülle - auch dann, wenn das einspeisende Drehstromsystem unsymmetrisch ist und einen Nullstrom führt.

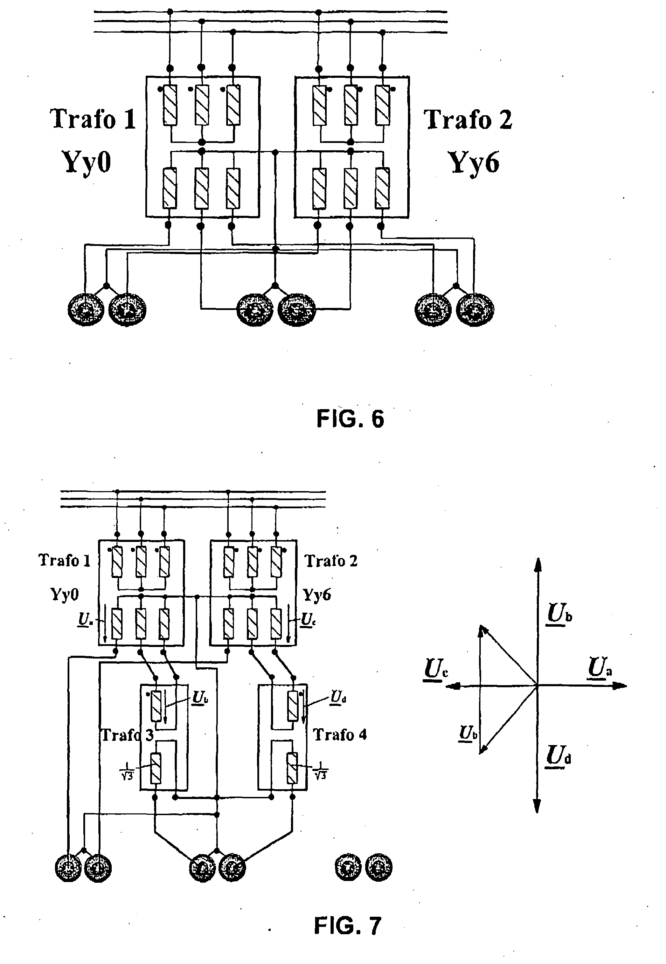

Schließlich bietet das bipolare Sechsphasensystem für unterschiedliche Störungsfälle erhebliche Systemredundanzen. Insbesondere ist die Auslegung eines Systems zur Realisierung eines bipolaren Vierphasensystems nach Fig. 7 nicht nur für den Störungsfall, sondern auch für einen sukzessiven und aufwandsminimierten Ausbau von Systemen von Bedeutung:

a. Fällt einer der drei Übertragungsstränge des bipolaren Sechsphasensystems nach Fig. 1 aus, so bietet sich die Möglichkeit, das System durch Umschaltung und mit Hilfe zweier weiterer in Fig. 7 gezeigter Transformatoren als bipolares Vierphasensystem weiter zu betreiben, bei dem die vier Phasenspannungen gegeneinander um jeweils 90° versetzt und die beiden Ströme eines Übertragungsstranges wieder gegenphasig sind.

Auch ist es auf diese Weise möglich, das Übertragungssystem je nach Ausbaustufe der zu übertragenden Leistung (z.B. Windkraftausbau) zunächst mit 2/3 der möglichen Leistung als bipolares Vierphasensystem zu betreiben, indem zunächst nur zwei der drei Seekabelstränge nach Fig. 1 gelegt werden, um später einen dritten Strang zu verlegen und das System dann als Sechsphasensystem mit der vollen Leistung zu betreiben.

Fig. 7 zeigt den prinzipiellen Aufbau einer Schaltung zum Betrieb eines bipolaren Vierphasensystems.

Zusätzlich zu den nach Fig. 7 für das bipolare Sechsphasensystem eingesetzten Drehstromtransformatoren (hier am Beispiel Yy0 und Yy6; Trafo 1 und Trafo 2) werden zwei Einphasen-Transformatoren (Trafo 3 und Trafo 4) mit entgegengesetztem Wicklungssinn ihrer Primärspulen und einem Übersetzungsverhältnis von 1:√3 eingesetzt. Auf diese Primärspulen wird jeweils eine verkettete Spannung des vorgeschalteten Drehstromtransformators geschaltet, die gegenüber der verbleibenden Sternspannung eine Phasenverschiebung um 90° aufweist und im Betrag um den Faktor √3 größer ist, vgl. Fig. 7. Diese Einphasentransforzziatoren können auch als Spartransformatoren ausgelegt werden.

Somit werden hinter jedem der beiden Drehstromtransformatoren zwei um 90° phasenversetzte Spannungen und insgesamt ein Vierphasensystem ohne pulsierende Leistung erzeugt. Die Anordnung nach Fig. 7 ist hier gewählt worden, um das Prinzip der Umwandlung zwischen drei und vier Phasen so einfach wie möglich zu veranschaulichen. In Aufwand (zusätzliche Transformatoren) und Leistungsfähigkeit (ungleiche Leistungsverteilung auf die Phasen des Dreiphasensystems) ist diese Lösung nicht optimal. Stattdessen bieten sich spezielle Dreiphasentransformatoren nach Leblanc oder ein Satz Einphasentransfornaatoren in Scott-Schaltung an (Heinz-Herbert Schaefer: Problematik der Stromversorgung von 50-Hz- und 60-Hz- Bahnstrecken. In: Elektrische Bahnen 2/1979, S. 41 - 46; R. J. Hill: Electrical railway traction, Part 3 Traction power supplies. In: Power Engineering Journal. December 1994, S. 275-286).

Der Aufbau auf der abgewandten Seite des Übertragungssystems ist entsprechend zu gestalten, so dass dort der Übergang auf ein Drehstromsystem gegeben ist.

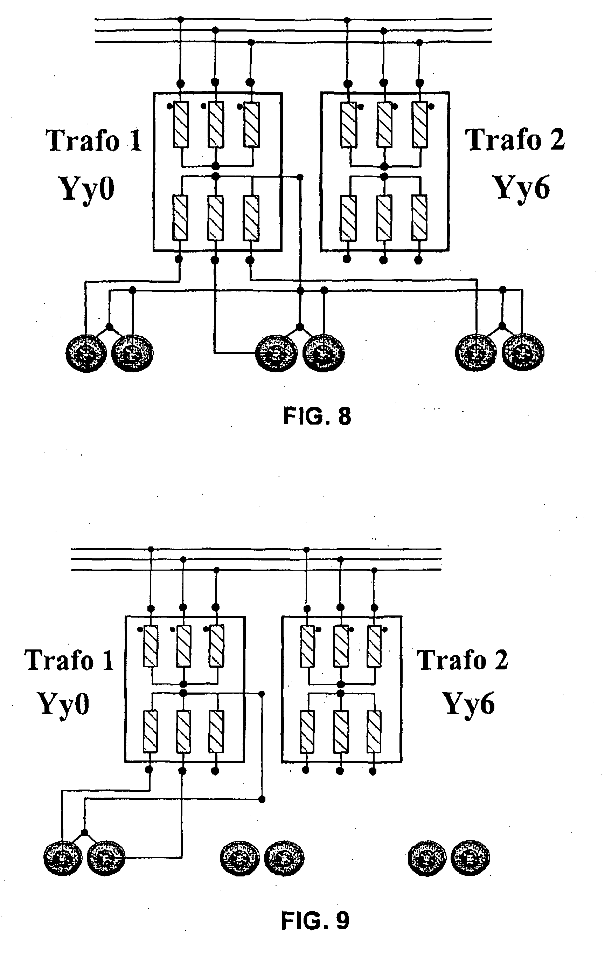

b. Fällt in dem sechsphasigen bipolaren Übertragungssystem nach Abb. 6 einer der beiden Drehstromtransformatoren (Trafo 1 und Trafo 2) aus, so kann durch Umschaltungen mit Hilfe einer Schaltung nach Fig. 8 über den verbleibenden Transformator zumindest die halbe Systemleistung weiter übertragen werden.

Voraussetzung hierfür ist, dass in jedem Übertragungsstrang die zweite Kabelader als Rückleitung für den Phasenstrom verwendet wird, was nach Fig. 8 durch beidseitige Erdung der Kabelleiter und der Metallmäntel und -Armierungen allein über die bestehenden Induktionswirkungen erreicht werden kann.

Prinzipiell handelt es sich in Abb. 8 um den Betrieb eines bipolaren Dreiphasensystems.

c. Fallen in dem sechsphasigen bipolaren Übertragungssystem nach Fig. 1 zwei der drei Übertragungsstränge aus, so kann durch Umschaltungen mit Hilfe einer Schaltung nach Fig. 9 über die verbleibenden beiden Kabel zumindest noch ein Drittel der System-Nennleistung weiter übertragen werden.

In diesem Fall findet eine zweiphasige Wechselstromübertragung statt mit den Nachteilen, dass das einspeisende Drehstromsystem unsymmetrisch belastet wird und dass eine pulsierende Leistung übertragen wird. Die pulsierende Leistung kann mit Kompensationsanlagen erheblich gemindert werden (R. J. Hill: Electrical railway traction, Part 3 Traction power supplies. In: Power Engineering Journal. December 1994, S. 275 - 286.).

Es wird ein Übertragungssystem vorgestellt, bei dem in der sechsphasigen Variante sechs HVAC-Kabeladern durch zwei Drehstromsysteme in Phasenopposition, also durch ein Sechsphasensystem eingespeist werden. Diese "bipolar betriebenen Drehstromsysteme" bieten für Seekabel die Möglichkeit, jeweils zwei Einleiter-Seekabel mit einem Verlegevorgang dicht nebeneinander zu legen, die als jeweiliges Wechselstromsystem mit Hin- und Rückleiter (Stromsumme Null) ein nach außen verschwindend geringes Magnetfeld aufweisen. Die drei Kabeltrassen bzw. Übertragungsstränge sind damit voneinander elektromagnetisch entkoppelt.

Dieses Prinzip ermöglicht es, zu höchsten Spannungen und zu größten Leiterquerschnitten der HVAC-Einleiter-Seekabel überzugehen, wodurch sich nach H. Brakelmann und M. Jensen ("Neues sechsphasiges Übertragungssystem für VPE-isolierte HVAC-See- und Landkabel hoher Übertragungsleistung"; in ew [2006] S. 34-43) neue Grenzen der Offshore-Drehstrom-übertragungstechnik eröffnen. Der Wirkungsgrad solcher Systeme liegt weitaus höher als bei herkömmlichen Dreileiter-Seekabeln (H. Brakelmann. Drehstrom-Netzanbindung großer Offshore-Windparks - Wirkungsgrade und Grenzen. H. WIND-KRAFT Journal (2002) H. 5, S. 68-72.).

Der zusätzliche Aufwand besteht zunächst darin, dass an beiden Enden der Übertragungsstrecke ein zusätzlicher Leistungstransformator oder ein Dreiwicklungstransformator vorzusehen ist, wie er in der Umrichtertechnik oder bei der Bahnstromversorgung bekannt ist. Zudem müssen Kompensationseinrichtungen vorgesehen werden für eine Kompensationsleistung, die doppelt so hoch ist wie bei einem einzelnen Drehstromsystem. Als aufwandsmindernde Variante könnten Umrichter der einspeisenden Kraftwerke (z.B. auch Windkraftanlagen) mit ihrem weiten, regelbaren Betriebsbereich dazu herangezogen werden, a) das zweite Drehstromsystem in Phasenopposition und/oder b) die erforderliche Kompensationsleistung offshoreseitig zumindest teilweise bereitzustellen.

Es sind drei Legevorgänge und drei Trassen erforderlich in einem Abstand, der etwa der Wassertiefe entspricht. Damit sind Verlegeaufwand und -dauer wesentlich größer als bei einer Einzeltrasse. Der Eingriff in die Natur erscheint nicht allzu schwerwiegend, da mit einem Verlegepflug oder einem Spülschlitten in einer Breite von rd. 0,5 m der Meeresboden während der Kabellegung geöffnet und sofort wieder aufgefüllt wird. Schon nach Stunden wird sich das aufgewirbelte Sediment wieder abgesetzt haben, so dass der Meeresboden in seinen ursprünglichen Zustand zurückkehrt. Wenn dessen Übertragungsfähigkeit ausreicht kann statt des Sechsphasensystems ein Vierphasensystem gewählt werden, mit entsprechend geringerem Ladestrom und Verlegungsaufwand. Für große Übertragungslängen kann auch eine Lösung mit niedrigerer Frequenz (und damit Ladestrom), z. B. 16 2/3 Hz (nach Schütte, Th.; Ström, M; Gustavsson, B.: Erzeugung und Übertragung von Windenergie mittels Sonderfrequenz. In: Elektrische Bahnen 11/2001, S. 435 - 443, mit Berichtigung in Elektrische Bahnen 1-2/2002, S. 74; Brakelmann, H; Steinbrich, K: Frequenzreduzierte Energieübertragung und -verteilung mit Kabeln. In Bull. des SEV (2002) H.1, S. 33-38) eine wirtschaftliche Alternative sein, mit vier oder sechs Phasen.

Die Armierungen der Einzeladern müssen unmagnetisch sein. Es ist in Abständen von einigen Kilometern ein galvanischer Kontakt zwischen den Armierungen zweier nebeneinander liegender Kabeladern herzustellen, damit sich die kapazitiven und dielektrischen Querströme der beiden Adern zu Null ergänzen können und nicht über die Bleimäntel transportiert werden müssen. Dies kann nach Fig. 5b mit Hilfe von fabrikgefertigten Korrosionsschutzmuffen geschehen, mit denen ein mit dem leitfähigen PE-Mantel und der Armierung kontaktierter Leiter aus der Ader herausgeführt und während des Verlegevorgangs über ein Ausgleichskabel mit der zweiten, genauso vorbereiteten Kabelader verbunden wird.

Diesem Mehraufwand stehen die folgenden Vorteile gegenüber:

i) Das System bietet die Möglichkeit, auf Drehstrom-Einleiter-Seekabel überzugehen. Dies bedeutet für die Drehstrom-Seekabeltechnik neue Möglichkeiten im Hinblick auf höchste Spannungen und größte Leiterquerschnitte. Die benötigten Kabeladern entsprechen dem gegebenen Stand der Drehstrom-Kabeltechnik, sind also für Spannungen bis zu 550 kV herstellbar.

ii) Es ergibt sich die Möglichkeit der "Offshore-Steckdose" bzw. der "Offshore-Sammelschiene", und zwar mit den vorhandenen, kostengünstigen und betriebssicheren Betriebsmitteln bewährter Drehstromtechnik, so dass auf platz- und kostenaufwendige Offshore-Umrichterstationen und auf Gleichstrom-Seekabel mit ölgetränkter Papierisolierung verzichtet werden kann. Auch die übertragungstechnischen Probleme von Erzeugungsausbaustufen (Kraftwerkserweiterungen land- oder seeseitig, z.B. Offshore-Windparks) können mit solchen Drehstromlösungen angegangen werden.

iii) Das Magnetfeld der Kabeltrasse ist wegen der dicht benachbart zurückgeführten Ströme sehr gering. Für Kompassfehlweisungen auf Schiffen oder Orientierungsbeeinträchtigungen bei Fischen sind die auftretenden Magnetfelder ohne Auswirkung.

## Patentansprüche

1.  Übertragungssystem für hohe Leistungen, mit zwei an ein Drehstromsystem angeschlossenen Drehstromtransformatoren (Trafo 1, Trafo 2), deren Spulen zur Erzeugung zweier gegeneinander in der Phase um 180° versetzter Wechselspannungen zueinander gegenläufige Wicklungen aufweisen, oder mit einem an ein Drehstromsystem angeschlossenen Dreiwicklungstransformator,
    **dadurch gekennzeichnet, dass**
    wenigstens ein Übertragungsstrang (L1, L2, L3) mit zwei dicht nebeneinander liegenden mit Wechselspannung beaufschlagten Kabeladern (L1-1, L1-2, L2-1, L2-2, L3-1, L3-2), deren Ströme gegenphasig sind, vorgesehen ist, wobei bei Landkabeln die Kupferschirme oder Metallmäntel in der Mitte eines Hauptabschnitts ausgekreuzt und am Ende des Hauptabschnitts geerdet sind und bei Seekabeln in Abständen ein galvanischer Kontakt zwischen den Armierungen zweier nebeneinander liegender Kabeladern (L1-1/L1-2, L2-1/L2-2, L3-1/L3-2) hergestellt ist.

2.  Übertragungssystem nach Anspruch 1, **dadurch gekennzeichnet, dass** für jede Phase des Drehstroms jeweils ein Übertragungsstrang (L1, L2, L3) vorgesehen ist, wobei je eine Kabelader (L1-1, L1-2, L2-1, L2-2, L3-1, L3-2) eines Übertragungsstrangs (L1, L2, L3) mit einer Sekundärwicklung jeweils eines Drehstromtransformators (Trafo 1, Trafo 2) verbunden ist, sodass ein sechsphasiges Übertragungssystem entsteht.

3.  Übertragungssystem nach Anspruch 1, **dadurch gekennzeichnet, dass** bei zweiphasigem Betrieb des Übertragungssystems mit nur einem Übertragungsstrang (L1) die Kabeladern des einen Übertragungsstrangs (L1) jeweils mit einer Sekundärwicklung nur eines Transformators (Trafo 1) verbunden sind, wobei deren Kupferschirme oder Metallmäntel gemeinsam geerdet sind.

4.  Übertragungssystem nach Anspruch 1, **dadurch gekennzeichnet, dass** bei Betrieb des Übertragungssystems mit drei Übertragungssträngen und nur einem Transformator (Trafo 1) je eine Kabelader eines Übertragungsstrangs (L1-1, L2-1, L3-1) mit je einer Sekundärspule des einen Transformators (Trafo 1) verbunden ist, wobei die anderen Kabeladern (L1-2, L2-2, L3-2) und die Kupferschirme oder Metallmäntel der Kabeladern (L1, L2, L3) gemeinsam geerdet sind.

5.  Übertragungssystem nach Anspruch 1, **dadurch gekennzeichnet, dass** bei vierphasigem Betrieb des Übertragungssystems mit zwei Übertragungssträngen (L1, L2) jeweils ein zwei Sekundärspulen je eines Drehstromtransformators (Trafo 1, Trafo 2) zusammenfassender Einphasen-Transformator (Trafo 3, Trafo 4) vorgesehen ist, wobei die Kabeladern (L2-1, L2-2) des einen Übertragungsstrangs (L2) mit der Sekundärwicklung je eines Einphasen-Transformators (Trafo 3, Trafo 4) und die Kabeladern (L1-1, L1-2) des anderen Übertragungsstrangs (L1) jeweils mit der verbleibenden Sekundärspule der Drehstromtransformatoren (Trafo 1, Trafo 2) verbunden sind und die Kupferschirme oder Metallmäntel der Kabeladern gemeinsam geerdet sind.

6. Übertragungssystem nach einem der vorhergehenden Ansprüche, **dadurch gekennzeichnet, dass** die beiden Kabeladern (L1-1/L1-2, L2-1 /L2-2, L3-1/L3-2) eines Übertragungsstrangs (L1, L2, L3) in eine gemeinsame Kabelkonstruktion, ein sogenanntes Zweileiterkabel, integriert sind.

7. Übertragungssystem nach einem der vorhergehenden Ansprüche, **dadurch gekennzeichnet, dass** die beiden Kabeladern (L1-1/L1-2, L2-1/L2-2, L3-1/L3-2) eines Übertragungsstrangs (L1, L2, L3) mit einer gemeinsamen magnetischen Hülle umgeben sind.

**Claims**

1. Transmission system for high power values with two three-phase transformers (transformer 1, transformer 2) that are connected to a three-phase system and whose coils have windings that are oppositely directed relative to each other for generating two alternating voltages with phases shifted by 180° relative to each other, or with a three-winding transformer connected to a three-phase system,
   **characterized in that**
   at least one transmission strand (L1, L2, L3) with two cable wires (L1-1, L1-2, L2-1, L2-2, L3-1, L3-2) that run closely next to each other and to which an alternating current is applied and whose currents are counter-phase, is provided, the copper shields or metal jackets being cross-jointed in the middle of a main section and earthed at the end of the main section in the case of buried cables and a galvanic contact being established in intervals between the armourings of two cable wires(L1-1/L1-2, L2-1/L2-2, L3-1/L3-2) lying next to each other in the case of submarine cables.

2. Transmission system according to Claim 1, **characterized in that** one transmission strand (L1, L2, L3) each is provided for each phase of the three-phase current, one cable wire (L1-1, L1-2, L2-1, L2-2, L3-1, L3-2) each of a transmission strand (L1, L2, L3) being connected to a secondary winding of one three-phase transformer (transformer 1, transformer 2) each, so that a six-phase transmission system is created.

3. Transmission system according to Claim 1, **characterized in that** in the case of a two-phase operation of the transmission system with only one transmission strand (L1) the cable wires of the one transmission strand (L1) are each connected to a secondary winding of only one transformer (transformer 1), their copper shields or metal jackets being jointly earthed.

4. Transmission system according to Claim 1, **characterized in that** during operation of the transmission system with three transmission strands and only one transformer (transformer 1) one cable wire each of a transmission strand (L1-1, L2-1, L3-1) is connected to one secondary coil each of the one transformer (transformer 1), the other cable wires (L1-2, L2-2, L3-2) and the copper shields or metal jackets of the cable wires (L1, L2, L3) being jointly earthed.

5. Transmission system according to Claim 1, **characterized in that** in the case of a four-phase operation of the transmission system with two transmission strands (L1, L2) a single-phase transformer (transformer 3, transformer 4) that joins two secondary coils of one three-phase (transformer 1, transformer 2) each is provided, the cable wires (L2-1, L2-2) of the one transmission strand (L2) being connected to the secondary winding of one single-phase transformer (transformer 3, transformer 4) each and the cable wires (L1-1, L1-2) of the other transmission strand (L1) being each connected to the remaining secondary coil of the three-phase transformers (transformer 1, transformer 2) and the copper shields or metal jackets of the cable wires being jointly earthed.

6. Transmission system according to one of the preceding claims, **characterized in that** the two cable wires (L1-1/L1-2, L2-1/L2-2, L3-1/L3-2) of a transmission strand (L1, L2, L3) are integrated into a joint cable design, a so-called two-conductor cable.

7. Transmission system according to one of the preceding claims, **characterized in that** the two cable wires (L1-1/L1-2, L2-1/L2-2, L3-1/L3-2) of a transmission strand (L1, L2, L3) are surrounded by a joint magnetic envelope.

**Revendications**

1. Système de transmission pour hautes puissances, avec deux transformateurs triphasés (Trafo 1, Trafo 2) connectés à un système triphasé, dont les bobines présentent des enroulements en sens contraire pour générer deux tensions alternatives déphasés de 180°, ou avec un transformateur à trois enroulements connecté à un système triphasé, **caractérisé en ce que** qu'il est prévu au moins une ligne de transmission (L1, L2, L3) avec deux conducteurs de câble étroitement adjacents soumis à une tension alternative (L1-1, L-2, L2-1, L2-2, L3-1, L3-2), dont les courants sont en opposition de phase, sachant que dans le cas de câbles terrestres, les écrans en cuivre ou les gaines métalliques sont croisés au milieu d'un tronçon principal et mis à la terre à la fin du tronçon principal et que, dans le cas de câbles marins, un contact galvanique est établi à intervalles entre les armatures de deux conducteurs de câble adjacents (L1-1/L1-2, L2-1/L2-2, L3-1/L3-2).

2. Système de transmission selon la revendication 1, **caractérisé en ce qu'**il est prévu une ligne de transmission (L1, L2, L3) pour chaque phase du courant triphasé, chaque fois un conducteur de câble (L1-1, L1-2, L2-1, L2-2, L3-1, L3-2) d'une ligne de transmission (L1, L2, L3) étant relié à un enroulement secondaire d'un transformateur triphasé (Trafo 1, Trafo 2) respectif, de sorte qu'il en résulte un système de transmission à six phases.

3. Système de transmission selon la revendication 1, **caractérisé en ce qu'**en cas de fonctionnement biphasé du système de transmissions avec seulement une ligne de transmission (L1), les conducteurs de câble de la ligne de transmission (L1) sont reliés chacun à un enroulement secondaire respectif de seulement un transformateur (Trafo 1), leurs écrans en cuivre ou gaines métalliques étant mis à la terre en commun.

4. Système de transmission selon la revendication 1, **caractérisé en ce qu'**en cas de fonctionnement du système de transmission avec trois lignes de transmission et seulement un transformateur (Trafo 1), chaque un conducteur de câble d'une ligne de transmission (L1-1, L2-1, L3-1) est relié à chaque fois une bobine secondaire du transformateur (Trafo 1), les autres conducteurs de câble (L1-2, L2-2, L3-2) et les écrans en cuivre ou gaines métalliques des conducteurs de câble (L1, L2, L3) étant mis à la terre en commun.

5. Système de transmission selon la revendication 1, **caractérisé en ce qu'**en cas de fonctionnement du système de transmission avec deux lignes de transmission (L1, L2), il est prévu chaque fois un transformateur monophasé (Trafo 3, Trafo 4) réunissant deux bobines secondaires de chaque fois un transformateur triphasé (Trafo 1, Trafo 2), les conducteurs de câble (L2-1, L2-2) d'une ligne de transmission (L2) étant reliés à l'enroulement secondaire de chaque fois un transformateur monophasé (Trafo 3, Trafo 4) et les conducteurs de câble de l'autre ligne de transmission (L1) respectivement à la bobine secondaire restante du transformateur triphasé (Trafo 1, Trafo 2) et les écrans en cuivre ou gaines métalliques des conducteurs de câble étant mis à la terre en commun.

6. Système de transmission selon l'une des revendications précédentes, **caractérisé en ce que** les deux conducteurs de câble (L1-1/L1-2, L2-1/L2-2, L3-1/L3-2) d'une ligne de transmission (L1, L2, L3) sont intégrés dans une construction de câble commune appelée câble à deux conducteurs.

7. Système de transmission selon l'une des revendications précédentes, **caractérisé en ce que** les deux conducteurs de câble (L1-1/L1-2, L2-1/L2-2, L3-1/L,3-2) d'une ligne de transmission (L1, L2, L3) sont entourés par une gaine magnétique commune.

L1-1    L1-2         L2-1    L2-2         L3-1    L3-2

**FIG. 1**

**FIG. 2**

FIG. 3

FIG. 4

FIG. 5 a

Korrosionsschutzmuffe

Kontaktierung Bewehrung
und Bleimantel

Verbindungskabel mit Muffe

**FIG. 5 b**

**Trafo 1**

**Yy0**

**Trafo 2**

**Yy6**

FIG. 6

Trafo 1

Yy0

$\underline{U}_a$

Trafo 2

Yy6

$\underline{U}_c$

$\underline{U}_b$

$\underline{U}_d$

Trafo 3

Trafo 4

$\frac{1}{\sqrt{3}}$

$\frac{1}{\sqrt{3}}$

$\underline{U}_b$

$\underline{U}_c$

$\underline{U}_a$

$\underline{U}_b$

$\underline{U}_d$

FIG. 7

Trafo 1

Yy0

Trafo 2

Yy6

**FIG. 8**

Trafo 1

Yy0

Trafo 2

Yy6

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HEINZ-HERBERT SCHAEFER.** Problematik der Stromversorgung von 50-Hz- und 60-Hz- Bahn- strecken. *Elektrische Bahnen,* 1979, vol. 2, 41-46
- **R. J. HILL.** Electrical railway traction, Part 3 Traction power supplies. *Power Engineering Journal.,* Dezember 1994, 275-286
- **R. J. HILL.** Electrical railway traction, Part 3 Traction power supplies. *Power Engineering Journal.,* Dezember 1994, 275-286
- Neues sechsphasiges Übertragungssystem für VPE-isolierte HVAC-See- und Landkabel hoher Übertragungsleistung. *ew,* 2006, 34-43
- **H. BRAKELMANN.** Drehstrom-Netzanbindung großer Offshore-Windparks - Wirkungsgrade und Grenzen. H. *WIND-KRAFT Journal,* 2002, vol. 5, 68-72
- **SCHÜTTE, TH. ; STRÖM, M ; GUSTAVSSON, B.** Erzeugung und Übertragung von Windenergie mit- tels Sonderfrequenz. *Elektrische Bahnen,* 2001, vol. 11, 435-443
- *Elektrische Bahnen,* 2002, vol. 1-2, 74
- **BRAKELMANN, H ; STEINBRICH, K.** Frequen- zreduzierte Energieübertragung und -verteilung mit Kabeln. *Bull. des SEV,* 2002, vol. 1, 33-38